# EUROPEAN PATENT APPLICATION

(11) **EP 1 146 334 A1**
(43) Date of publication of application: **17.10.2001**
(21) Application number: 00201340.7
(22) Date of filing: 14.04.2000
(51) Int. Cl.: G01N 31/10, G01N 1/00

(54) **Apparatus and method for testing samples of a solid material**

(71) Applicant: Akzo Nobel N.V., 6824 BM Arnhem (NL)
(72) Inventor: Jonker, Robert J., 1077 AT Amsterdam (NL)
(74) Representative: Schalkwijk, Pieter Cornelis, c.s.

(57) **Abstract**

The invention pertains to an apparatus for testing samples of a solid material, such as a catalyst or an adsorbent, contained in a reactor tube, said apparatus at least comprising a holder for a tube and a flow module for generating a carrier fluid flow containing a probe through a tube positioned in the holder. The apparatus further comprises a magazine for tubes or means for accommodating a magazine for tubes, and means for replacing a tube positioned in the holder with a tube from the magazine.

The apparatus may be combined with a suitable automated thermal desorption unit.

## Description

The invention pertains to an apparatus for testing samples of a solid material, such as a catalyst or an adsorbent, contained in a reactor tube, said apparatus at least comprising a holder for a tube, a flow module for generating a carrier fluid flow containing a probe through a tube positioned in the holder.

Such an apparatus is generally known and used in the testing of catalyst samples, for example to locate the performance optima of a particular catalyst in very complicated and large parameter spaces or to select the most suitable catalyst for a particular process from a number of candidates. Also, operation windows can be accurately mapped and certain process variables are more readily understood, which may result in more robust manufacturing recipes.

The more advanced methods of analysis involve, for instance, measuring the pulse response of a catalyst sample contained in an experimentation reactor, such as a thermostatic glass or quartz tube. A substantially constant flow of a gaseous or liquid carrier fluid is led through the catalyst sample. The catalyst sample can be present, e.g., in the form of a fixed bed or a bed that is fluidised by the carrier fluid. A probe, such as an accurately defined amount of hydrogen or of a particular organic compound or a particular composition of organic compounds, is injected into the flow of carrier fluid during a well-defined (usually very narrow) time-span, thus effectively creating a pulse.

In another method of analysis, the catalyst contained in a reactor tube is continuously being perfused with a probe, while the temperature is, e.g., accurately maintained, decreased or increased during a linear temperature program.

The response of the catalyst, i.e. the composition of the reaction products and the distribution in time of the composition, is determined in an analysis system. Various performance parameters of the catalyst, such as conversion, selectivity, and metal dispersion can be derived from this response.

By carrying out a very substantial number of these kinds of experiments, it is possible, among others, to locate performance optima or to accurately map operation windows. As a matter of course, substantial experimentation requires substantial labour, time and expenses.

In the petrochemical catalyst industry, a strong need exists for high-throughput experimentation techniques for (combinatorial) catalysis.

It is an object of the invention to provide an improved apparatus for analysing samples of solid materials that allows, among others, acceleration of the design and hence shortens the time to market of a new catalyst.

This object is achieved by the apparatus as described in the opening paragraph, which further comprises a magazine for tubes or means for accommodating a magazine for the said tubes (containing a sample of a solid material) and means for replacing a tube positioned in the holder with a tube from the magazine.

The apparatus according to the present invention provides unattended operation for the analysis of a large number of samples (e.g. ten, thirty or fifty or more) and, accordingly, allows a very substantial reduction of the time and effort that are required, e.g., to develop a new catalyst.

Further, it was found that the object of the invention can also be achieved by combining an existing automated thermal desorption unit and a flow module for generating a carrier fluid flow containing a probe. In such units, it is preferred that the carrier fluid is gaseous (instead of liquid).

Thus, the apparatus according to the present invention can be built using generally known and available components such as the aforementioned automated thermal desorption unit and the aforementioned flow module.

In methods that employ a pulsed or stepped probe, it is preferred that the flow module further comprises an injector for injecting a probe and/or additional carrier fluid into the carrier fluid flow. It is further preferred that the probe and/or additional carrier fluid is injected into the carrier fluid flow relatively close to the holder. Thus, disturbance of the fluid flow in the feedline is substantially avoided.

The flow module preferably comprises a feedline for establishing fluid communication with a tube that is placed into the holder wherein the cross-sectional area of the lumen of the feed line (downstream of the injector) is substantially smaller than the cross-sectional area of the lumen of the tube. Thus, the shape of the pulse inputted into the feed line can be maintained more accurately, and there will be less risk of information obtainable from the pulse response being lost, or such risk may even be substantially avoided.

It is preferred that the temperature of a tube placed in the holder can be accurately controlled. It is further preferred that at least one of the tubes in the magazine is a blank tube, i.e. a tube that does not contain a catalyst sample. Thus, a blank tube sample is automatically inserted before the start of an actual run and sample carry-over is substantially avoided. It is preferred that every other tube in the magazine is a blank tube.

The invention further pertains to a method of testing a plurality of samples of a solid material by means of an apparatus which at least comprises a holder for a tube, a flow module for generating a carrier fluid flow containing a probe and a magazine for tubes or means for accommodating a magazine for tubes, which method involves placing a tube in the holder, generating a carrier fluid flow through the tube, and replacing the tube with a tube from the said magazine or means.

The invention also pertains to the use of an automated thermal desorption unit for testing a plurality of samples of a solid material by means a probe.

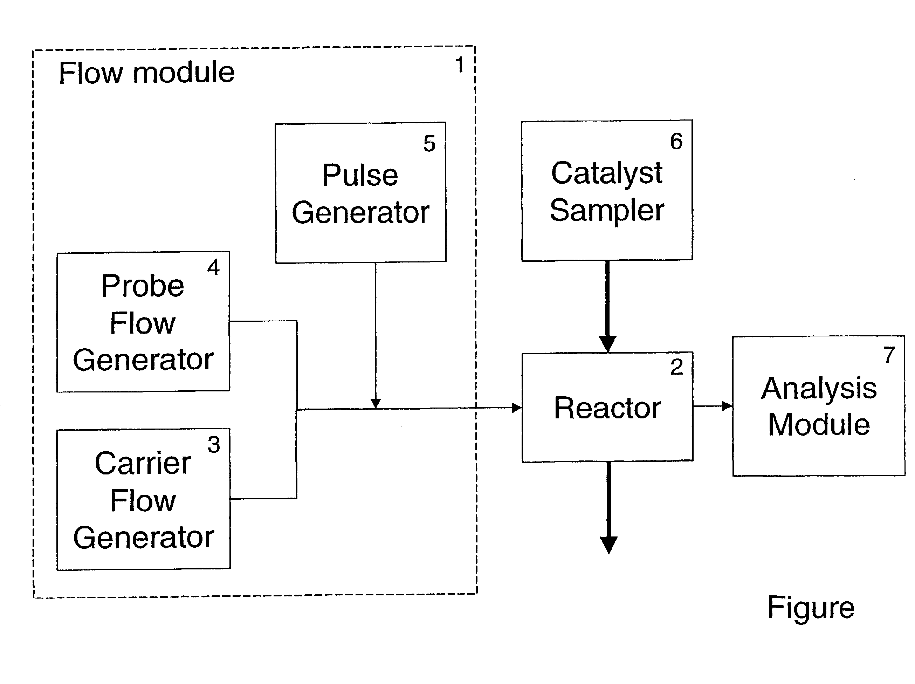

The invention will be further explained with reference to the Figure, in which an embodiment of the apparatus of the invention is schematically shown.

The Figure shows a flow module 1, which is in fluid communication with a reactor tube 2 containing a sample of a solid material, such as a catalyst, by means of a feed line. The flow module 1 supplies a carrier fluid flow containing a probe to the reactor tube 2 and should be capable of operating at constant flows or pressures.

The flow module 1 shown in the Figure comprises a carrier fluid flow generator 3, a probe flow generator 4 and a pulse generator 5, which, in this particular example is arranged to generate a pulse of a probe or of additional carrier material. Several input signals are conceivable.

If the probe flow generator 4 is turned off, the fluid flow passing the pulse generator 5, which may for example comprise a sample valve or an injector, will consist entirely of an inert carrier fluid. During an experiment, the pulse generator 5 will inject, e.g., one or more pulses of a probe into the carrier fluid flow. If a step function is to be generated, it is preferred to turn on the probe flow generator 4 for the duration of the step.

If the probe flow generator 4 is turned on permanently, in which case, e.g., a static mixer or a feedline with a small diameter for homogeneously mixing the carrier fluid and the probe is provided, or if the carrier flow generator is being fed with a carrier fluid that already contains a probe, the fluid flow passing the pulse generator 5 will consist entirely of a mixture of an inert carrier fluid and a probe. Thus, the catalyst sample contained in the reactor tube 2 is continuously being perfused with a probe, and experiments can be performed, e.g., by means of a temperature program imposed on the reactor tube 2 or by injecting one or more pulses or a step function of the (unmixed) carrier fluid into the carrier/probe mixture flow.

It is preferred that the flow module 1 is programmable at least in terms of flow and composition of the carrier/probe mixture. A suitable probe or carrier flow generator is, for instance, the Brooks 5850 S mass flow controller. The carrier fluid may be, for instance, an inert gas such as helium or nitrogen. The probe can be any chemical agent with which the sample of a solid material can be tested. If the said solid material is a catalyst, the probe can, e.g., consist of hydrogen, oxygen, hydrogen sulphide, organic compounds, with or without heteroatoms such as sulphur or nitrogen, or mixture thereof.

For a detailed description of pulse experiments, reference may be had to, e.g., Coopmans, J.F. "Kinetics of Vacuum Gas Oil Cracking on a Zyolitic Catalyst," I&EC RESEARCH, 1992, page 31 ff.

The aforementioned feed line is connected to a reactor tube 2 placed in a holder. Upon insertion of a tube in the holder, a connection is established between the feed line and this tube. This connection is preferably such that the flow of a carrier fluid containing a probe is left substantially undisturbed by, e.g., accelerations or changes in pressure, temperature or surface conditions of the inner wall of the feed line or the reactor tube 2. Disturbing the carrier fluid and/or the probe is likely to result in loss of information obtainable from the experiments.

It is also possible to inject a probe and/or additional carrier fluid directly into the reactor, e.g., through one or more nozzles near the outlet of the feedline. Such a configuration is especially applicable to systems employing a gaseous carrier fluid flow and a liquid probe and/or liquid additional carrier fluid.

The reactor unit is preferably provided with an oven or a heater so as to control the temperature at which the sample of a solid material is in contact with the probe.

A catalyst sampler 6 or magazine is positioned near the holder for storing reactor tube containing a catalyst sample and for replacing the tubes in the holder. The catalyst sampler should preferably be able to contain a large number of samples, e.g., ten, thirty or fifty or more. Also, it is preferred that means are provided to condition the stored samples.

A suitable automated thermal desorption unit, that can be used instead of the holder and the catalyst sampler, is known for instance from US patent 4,976,924. This document describes a thermal desorption unit into which a magazine comprising mini-tubes can be placed. The mini-tubes contain samples taken from, e.g., a workplace environment in order to monitor air quality. Each mini-tube is selectively withdrawn automatically from the magazine, the sample absorbed in the tube is taken from the mini-tube by heating, the mini-tube is flushed with heated air to cleanse the absorption material within the mini-tube and the inner wall of the tube, and the tube is then replaced within the magazine. US patent 4,976,924 does not disclose or imply the addition of a probe to the heated air.

The output of the reactor tube 2 is connected to an analysis module 7 for determining (certain aspects of) the composition of the reaction products exiting the reactor tube, which module may, e.g., contain a gas chromatograph or chromatographic detectors like a thermal conductivity detector, flame ionization detectors or spectroscopic detectors like a mass spectrometer or an UVVIS spectrometer. Thus, the difference in composition at the inlet and the outlet of the reactor tube 2 can be established, preferably as a function of time.

With the invention, it becomes possible to build a high-throughput experimentation apparatus using existing components. Further, a large number of catalyst samples can be tested in (relatively) little time and/or with (relatively) small effort.

The invention is not in any way restricted to the embodiments described above, which can be varied in a number of ways within the scope of the claims. For instance, within the framework of the present invention, the term "tube" encompasses any reactor that is capable of holding a sample of a solid material and that is preferably also suitable for insertion into a thermal desorption unit of some sort.

## Claims

1. Apparatus for testing samples of a solid material, such as a catalyst or an adsorbent, contained in a reactor tube, said apparatus at least comprising a holder for a tube, a flow module for generating a carrier fluid flow containing a probe through a tube positioned in the holder, a magazine for tubes or means for accommodating a magazine for tubes, and means for replacing a tube positioned in the holder with a tube from the magazine.

2. Apparatus for testing samples of a solid material, such as a catalyst or an adsorbent, contained in a reactor tube, said apparatus at least comprising an automated thermal desorption unit and a flow module for generating a carrier fluid flow containing a probe.

3. Apparatus according to claim 1 or 2 wherein the flow module further comprises an injector for injecting a probe and/or additional carrier fluid into the carrier fluid flow.

4. Apparatus according to claim 3 wherein the injector is positioned relatively close to the holder.

5. Apparatus according to any one of the preceding claims wherein the flow module comprises a feedline for establishing fluid communication with a tube that is placed into the holder and wherein the cross-sectional area of the lumen of the feed line is substantially smaller than the cross-sectional area of the lumen of the tube.

6. Apparatus according to any one of the preceding claims wherein means are provided for accurately controlling the temperature of a tube that is placed into the holder.

7. Apparatus according to any one of the preceding claims which further comprises an analysis module for at least partially determining the composition of the reaction products exiting the reactor tube.

8. Method of testing a plurality of samples of a solid material contained in a reactor tube by means of an apparatus which at least comprises a holder for a tube, a flow module for generating a carrier fluid flow containing a probe and a magazine for tubes or means for accommodating a magazine for tubes, which method involves placing a tube in the holder, generating a carrier fluid flow through the tube, and replacing the tube with a tube from the said magazine or means.

9. Method according to claim 8 wherein the probe and/or additional carrier fluid is injected into the carrier fluid flow relatively close to the holder.

10. Use of an automated thermal desorption unit for testing a plurality of samples of a solid material by means a probe.
